(19)

Europäisches Patentamt
European Patent Office
Office européen des brevets

(11)  **EP 4 303 357 A1**

(12)  **EUROPEAN PATENT APPLICATION**
published in accordance with Art. 153(4) EPC

(43) Date of publication:
**10.01.2024  Bulletin 2024/02**

(21) Application number: **21928679.6**

(22) Date of filing: **19.05.2021**

(51) International Patent Classification (IPC):
**D06P 5/30** (2006.01)      **G06Q 30/06** (2023.01)

(52) Cooperative Patent Classification (CPC):
Y02P 90/30

(86) International application number:
**PCT/CN2021/094539**

(87) International publication number:
**WO 2022/183598 (09.09.2022 Gazette 2022/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  **03.03.2021  CN 202110234342**

(71) Applicant: **Zhejiang Shanyu Group Co., Ltd
Taizhou, Zhejiang 318000 (CN)**

(72) Inventors:
• **MI, Xiongfei
Taizhou, Zhejiang 318000 (CN)**
• **LI, Ce
Taizhou, Zhejiang 318000 (CN)**
• **LI, Yiteng
Taizhou, Zhejiang 318000 (CN)**
• **CHEN, Junjie
Taizhou, Zhejiang 318000 (CN)**

(74) Representative: **Locas, Davide et al
Cantaluppi & Partners S.r.l.
Piazzetta Cappellato Pedrocchi, 18
35122 Padova (IT)**

(54)  **DIGITAL COLOR MATCHING AND DYEING METHODS, AND DIGITAL COLOR MATCHING AND DYEING SYSTEMS**

(57)  Disclosed are digital color matching and dyeing methods and color matching and dyeing systems for pure color dyeing of fabrics. The digital color matching method includes steps of pre-establishing a digital color matching system, obtaining LAB values of a target sample color, searching a color database, obtaining a recommended ink formula, comparing formulas, etc. The color matching system includes a color measurement probe unit, a storage unit, a data processing unit, and a multi-ink path scanning printing unit. The digital dyeing method includes digital color matching, preparation of ink for ink jet dyeing, and fixed single-channel ink jet dyeing. The digital dyeing system is mainly composed of a digital color matching system, an ink mixing module, and a fixed single-channel digital ink jet module. The present invention has advantages of traditional dyeing processes and digital printing, such as cleanness, fastness, complete matching in colors of printing samples and large-scale production, wide color gamut, very good uniformity, and same depth and hue as traditional dyeing.

FIG. 2

**EP 4 303 357 A1**

**Description**

**BACKGROUND OF THE INVENTION**

1. Technical Field

The present invention relates to the technical field of fabric dyeing methods and related equipment, in particular to digital color matching and dyeing methods and color matching and dyeing systems for dyeing fabrics in pure colors.

2. Description of Related Art

With the continuous improvement of people's life quality and modern technology level, people increasingly pursue for colors of fabrics. Different fabrics can be dyed with pure colors by traditional dyeing processes or printed with single colors by digital printers.

The traditional dyeing processes for fabrics can be divided into dip dyeing and pad dyeing according to contact modes between dyes and fabrics. The dip dyeing is to dip a dyed fabric in dye liquor to dye the fabric uniformly by circulation of the dye liquor and relative movement of the dyed fabric, and during the dip dyeing, the dye and the dyed fabric can be circulated simultaneously or separately. The pad dyeing is to dip a flat fabric in dye liquor for a short time, then press the fabric with a press roll to squeeze the dye liquor into interiors of fibers and gaps of fabric tissues such that the dye is uniformly distributed on the fabric, remove excess dye liquor, and steam or bake the dyed fabric to complete the diffusion and fixation of the dye on the fiber. However, the traditional dyeing processes have disadvantages of large order quantity, poor color matching, high consumption of water, steam, etc., great matching difference from color matching to dyeing, more dependence on levels of masters, low environmental protection, high cost, and low efficiency, and have advantages of wide color gamut, good dyeing uniformity, and high level of depth and hue.

All pure color printings implemented by digital printing on the current market are based on a printing mode of a digital printer, which realizes visually pure colors by positioning and dotting of a variety of colors. Such printing methods have problems of visually dotted graininess in printed pure color fabrics, rough dots, insufficient color hue and saturation, insufficient depth and ink volume, and unsatisfactory color consistency, and have disadvantages of failing to realize industrialization, large block surface, and high-speed and long-time pure color block printing. In addition, the digital printer has high requirements for color management during printing, the color reproduction cannot meet the requirements of pure color printing, and the gamut of colors that can be printed is limited.

In view of this, how to overcome the disadvantages of low environmental protection, high cost and low efficiency of the traditional dyeing processes during pure color dyeing, great difference in dye matching, low precision and low efficiency during color matching, and dotted graininess, low color precision and the like during digital pure color printing becomes the subject to be studied and solved by the present invention.

**BRIEF SUMMARY OF THE INVENTION**

The objective of the present invention is to provide digital color matching and dyeing methods and color matching and dyeing systems, which overcome the disadvantages of low environmental protection, high cost and low efficiency of traditional dyeing processes during pure color dyeing, large differences in dye matching, low precision and low efficiency during color matching, and dotted graininess, low color precision and the like during digital pure color printing, and also have advantages of traditional dyeing processes and digital printing, such as cleanness, fastness, complete matching in colors of printing samples and large-scale production, wide color gamut, very good uniformity, and same depth and hue as traditional dyeing.

In order to achieve the above objective, in the first aspect, the present invention adopts a technical solution of a method: a digital color matching method for digital color matching of a pure color formula of a sample fabric, the method including:

S100, pre-establishing a digital color matching system including an input module, a color database, and a calculation processing module, and preparing and inputting formula data of a basic color;

S200, selecting and setting, by a user, a system color deviation value serving as a basis for search and calculation of the digital color matching system; (the color deviation selection value is DE, which may be less than or equal to 0.5 and is 0.2 to 1 for digital dyeing products)

S300, obtaining LAB values of a target sample color, and inputting the LAB values of the target sample color into the color database; (L, A, B values of a color can be detected by a COMAT color measurement module, a data color system, or other systems)

S400, searching the color database to obtain a record matching the LAB values of the target sample in the color database, the record here not including the LAB values of the target sample itself, that is, obtaining other data except the LAB values of the target sample, the record including a color formula corresponding to the LAB values, and using the color formula as a recommended ink formula (i.e., the three L, A, B values are identical),

if the record matching the LAB values of the target sample is not obtained, expanding numerical ranges of the L, A, B values, searching in the color database whether there are data records matching the L, A, B values respectively within the expanded numerical ranges, judging the color, capturing three called ink formulas that respectively match one of the L, A, B values and have similar colors in the target sample, and calculating, by the calculation processing module, an ink dosage in each of the ink formulas according to the difference between the LAB values of the target sample and each of the three called ink formulas to obtain a recommended ink formula;

S500, preparing ink according to the recommended ink formula obtained in S400, printing with the prepared ink to obtain a color block sample, measuring LAB values of the color block sample, and inputting the formula and LAB values of the color block sample into the color database to increase nodes of next digital color matching search; and S600, comparing the LAB values of the color block sample in the color database and the target sample and calculating a sample color deviation value, if the sample color deviation value is smaller than or equal to the system color deviation value, using the recommended ink formula of the color block sample as a correct ink formula of the target sample, and

if the sample color deviation value is greater than the system color deviation value, repeating S400, S500, and S600 until the sample color deviation value of the color block sample and the target sample is smaller than or equal to the system color deviation value, and inputting data of the correct formula of the target sample into the color database.

In the second aspect, the present invention further proposes a digital color matching system using the above method, the digital color matching system including a color measurement probe unit, a storage unit, a data processing unit, and a multi-ink path scanning printing unit, wherein:

the color measurement probe unit is configured to detect a sample fabric and a color block fabric to obtain corresponding L, A, B values;
the storage unit is configured to store a color database with a variety of color information, each piece of color information including a color, a color number, LAB values, a color intensity formula and a color ink formula;
the data processing unit is configured to search the database according to the inputted color block sample data and obtain matching ink formula data,
obtain from the database three ink formula data that match three LAB values of the color block sample and have similar colors, obtain a recommended ink formula according to LAB value differences corresponding to the colors in the three ink formula data, and record the formula in the color database; and
the multi-ink path scanning printing unit is configured to print the color block sample.

In the third aspect, the present invention proposes a digital dyeing method, including digital color matching, preparation of ink for ink jet dyeing, and fixed single-channel ink jet dyeing, wherein the digital color matching includes the digital color matching method described in the first aspect.

In the fourth aspect, the present invention further proposes a digital dyeing system using the above method, the system mainly consisting of a digital color matching system, an ink mixing module and a fixed single-channel digital ink jet module, the digital color matching system including the digital color matching system described in the second aspect, the ink mixing module including an ink pre-mixing unit and a production ink mixing unit, wherein the ink pre-mixing unit is configured to pre-mix ink based on a color formula provided by a color measurement software unit, so that the multi-ink path scanning printing unit prints a corresponding color block sample; the production ink mixing unit is configured to prepare ink for production;
the fixed single-channel digital ink jet module includes at least one set of automatic unwinding and feeding unit, at least two sets of fixed nozzle ink jet printing unit, a belt guide unit, and a drying unit, wherein:

the automatic unwinding and feeding unit is configured to transport a pre-treated fabric that needs to be dyed to the fixed nozzle ink jet printing unit;
the fixed nozzle ink jet printing unit is used for direct dyeing and ink jet printing of the prepared ink onto the fabric;
the belt guide unit is configured to feed the printed fabric to the drying unit; and
the drying unit is configured to dry the printed fabric.

The relevant content of the present invention is explained as follows:

1. In the above-mentioned color matching method and color matching system, the color database records data of colors, hexadecimal color numbers, L, A, B values, color intensity formulas and color ink formulas, and the calculation processing module searches, analyzes and inputs the data in the color database, wherein initial data includes basic color and color formula information. New color and color formula data can be obtained every time during digital color matching of a new sample, then the data is inputted into the color database to form a color gamut network, all colors form nodes in the network, and newly added colors add nodes, so that the accuracy of formulas of colors added later is greatly improved. The input module inputs colors, color numbers, LAB values, color intensity formulas and color ink formulas into the color database, and the calculation processing module searches, analyzes and calculates the data in the color database.

2. In the above color matching method, step S100 is completed by the following steps:

S110, making a basic formula table according to basic colors selected by a user, and inputting the formula into the color database by the input module, wherein red, yellow, blue, black, gray, green, or other colors may be used as the basic color;

S120, preparing ink and printing a basic sample with a printer;

S130, reading LAB values of the color of the printed basic sample after color development and fixation; and

S140, automatically reading/inputting the basic color formula and the corresponding LAB values into the color database to form a color database including the basic color formula.

It is necessary to establish the above independent color database. Due to different manufacturers and models of inks (or dyes) used by customers, the color tone, saturation, luminosity, etc. of the colors are different. Each customer uses his own database based on his own product. After use for a certain time, colors are determined, the accuracy of color matching will be greatly improved, the differentiation from other customers is maintained at the same time, and the color matching will not be affected by adjustments of other customers.

3. In the above color matching method, the numerical range specified for L is 0 to 100; the numerical range specified for A and B is -128 to +128; the specified numerical ranges are more direct for the expansion of numerical ranges, the adjustment of a formula is more intuitive, and corresponding color values in the color ink formula can be directly adjusted by means of a contrast difference between the target sample and the color block sample.

4. In the above color matching method, when the L, A, B data values of the target sample color are inputted into the color database, and the color database is searched to find whether there is matching formula data, if the data does not match, the numerical ranges of LAB are expanded, and then an ink formula that satisfies the condition is captured, wherein the LAB values are expanded by $\pm 1$. Since the data in the database will be expanded later, the numerical ranges expanded by $\pm 1$ for search can meet minimum search requirements, avoid missing data with high matching as much as possible, improve the accuracy of data matching, and reduce the time of digital color matching. After the LAB values are expanded, whether there is matching data within the numerical ranges is searched in the color database, and colors are judged at the same time. If the data within the numerical ranges is not found or the colors are judged to be similar, the numerical ranges of LAB are continuously expanded to repeatedly search whether there is matching data within the numerical ranges, and colors are judged. If the data within the numerical ranges is found, the colors are judged to be similar, and the number of data is more than 1, an ink formula that satisfies this condition is randomly captured. When the data that matches and have similar colors is found, because the range is relatively small, the randomly captured data is used as a sample making reference.

5. In the above color matching method, in step S500, the ink formula of the color block sample and the measured LAB values are inputted into the color database to increase nodes of digital color matching search, so as to form a color gamut network. All colors form nodes in the network, and newly added colors add nodes, so that the accuracy of formulas of colors added later is greatly improved.

6. In the above color matching system, the digital color matching system further includes a remote color measurement module and a remote data system module, the remote color measurement module includes a client color measurement device, the remote data system module is configured to include a customer personal color center database and a general cloud color center database, the remote color measurement module transmits color information of a sample fabric to the customer personal color center database at a cloud, and the cloud reviews and submits the color information to the general cloud color center database.

7. In the above dyeing method, the steps of fixed single-channel ink jet dyeing are as follows:

loading a fabric that is pre-treated and needs to be dyed to an ink jet dyeing machine;

feeding the color-matched ink into an ink system;

starting the machine for direct jet dyeing and ink jet printing with fixed nozzles; and

delivering the printed fabric to an oven by the belt guide unit for drying.

8. In the above dyeing method, when the fixed nozzles are used for ink jet printing, at least two sets of fixed nozzle ink jet printing units are used, of which at least one set of fixed nozzle ink jet printing unit performs printing, and at least one set of fixed nozzle ink jet printing unit is cleaned at a cleaning position and is ready for next printing task, so that almost uninterrupted operation can be achieved during ink jet printing, and the continuity of dyeing operation is increased to improve dyeing efficiency and dyeing quality.

The working principle of the color matching system in the present invention is as follows: LAB values of a target color are detected, a formula is searched in the system through the values, ink of the color is adjusted based on the formula when a completely matching color is found, and a large amount of ink for batch production is prepared after printing confirmation; if there is no corresponding color in the system, a similar color is searched, a formula is called out and improved according to the color difference, then a small sample of ink is mixed, the ink is loaded to the machine for printing, and the result is tested; if the result is very different, the formula is adjusted again according to the result; until the requirements are met, the color is inputted into the formula table to add a node so as to improve a formula system. The system is based on a variety of dyes of different colors, and the number of colors is not limited, so that the color range can be on a par with the color range provided by the traditional dyeing process.

The beneficial effects of the present invention are as follows:

1. The present invention has advantages of cleanness, fastness, complete matching in colors of printing samples and large-scale production, wide color gamut, very good uniformity, and same depth and hue as traditional dyeing. At the same time, the water consumption is greatly reduced. For a large part of products, no washing is required, so the present invention is energy-saving and environmentfriendly, and saves research, development and production costs for enterprises;

2. With the application of the systems and methods, all colors form nodes in the network, and the newly added colors add nodes, which can give us color formulas we need to prepare; there are enough colors, enough nodes and a large and compact enough network, so that the accuracy of formulas of colors added later is greatly improved; the correct ink formula can be obtained quickly and accurately from the detected LAB values of the sample;

3. In the database, there will be a large number of formulas for colors actually produced, which greatly reduces the time for color matching, increases the accuracy, and ensures that the hue, luminosity, etc. of the colors during preparation are within the correct area, so that the search range is narrowed during use, the precision is increased, the required color formula is quickly and accurately obtained, and the application of the system has sufficient convenience and effectiveness.

## BRIEF DESCRIPTION OF THE SEVERAL VIEWS OF THE DRAWINGS

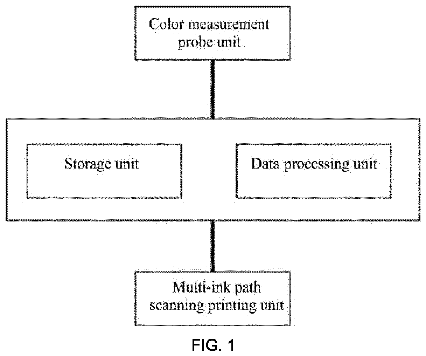

Fig. 1 is a structural block diagram of a color matching system according to an embodiment of the present invention;
Fig. 2 is a flowchart of a digital color matching method according to an embodiment of the present invention;

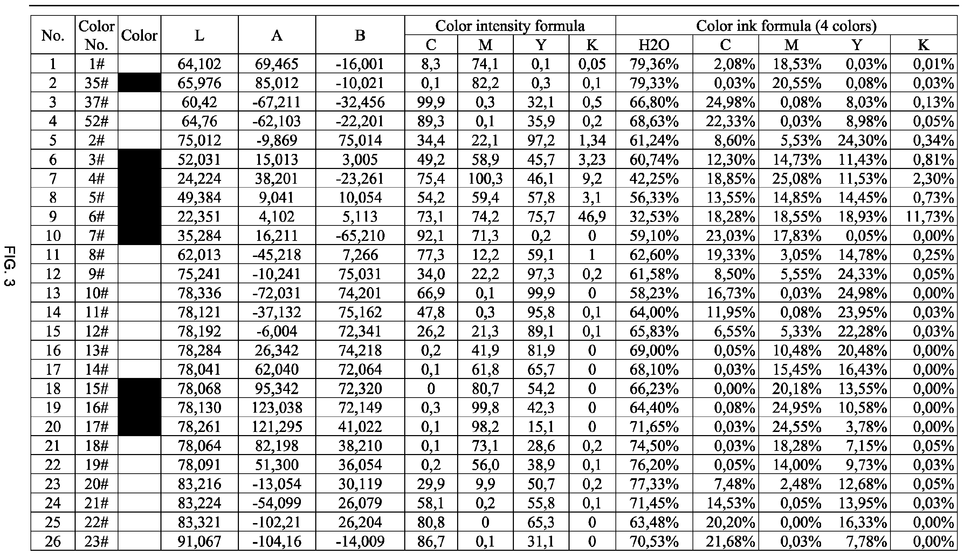

Fig. 3 is an example of an initial database table established in the digital color matching method according to an embodiment of the present invention;

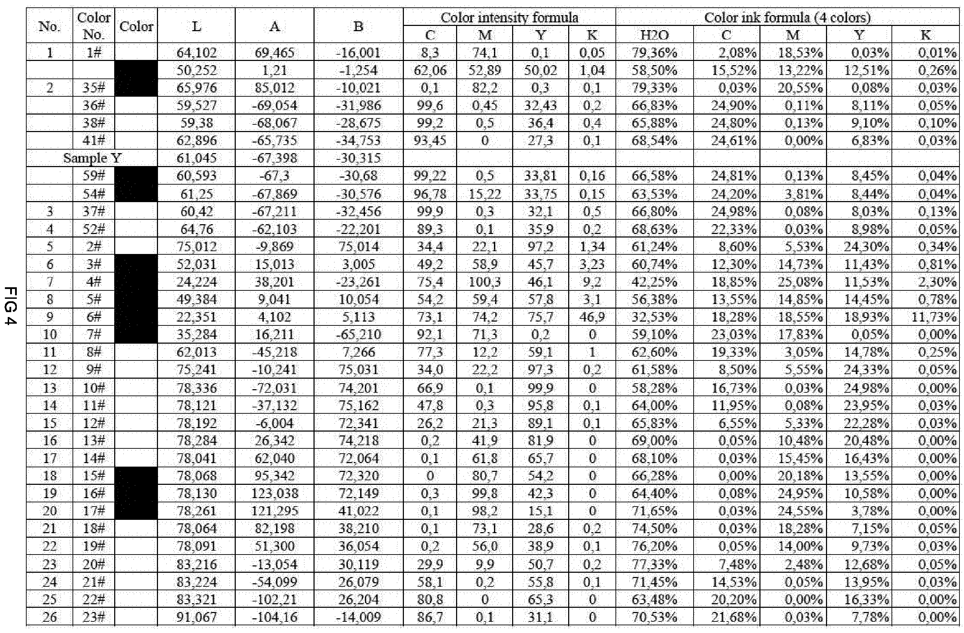

Fig. 4 is an example of a color database table when adding samples and recalling data in an application process in the digital color matching method according to an embodiment of the present invention;

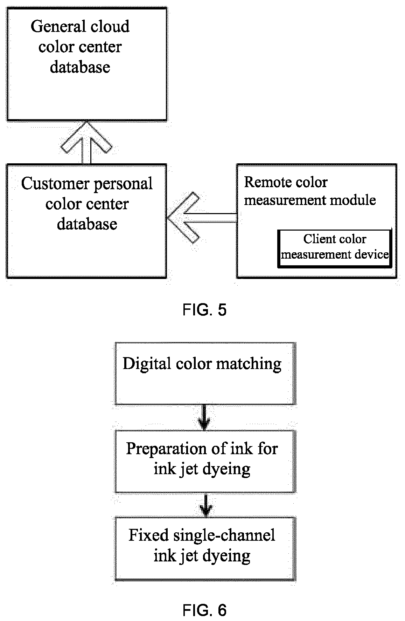

Fig. 5 is an example block diagram of a remote color measurement module and a remote data system module included in the digital color matching method according to an embodiment of the present invention;
Fig. 6 is a flowchart of a digital dyeing method according to an embodiment of the present invention;

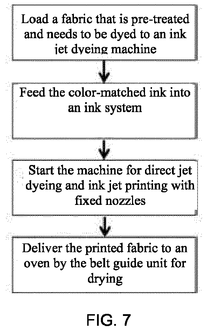

Fig. 7 is a flowchart of step-fixed single-channel ink jet dyeing in the digital dyeing method according to an embodiment of the present invention;

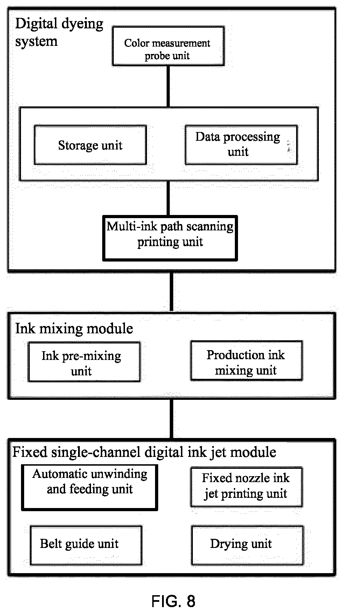

Fig. 8 is a structural block diagram of a dyeing system according to an embodiment of the present invention.

## DETAILED DESCRIPTION OF THE INVENTION

In the embodiments of the present invention, relevant descriptions are as follows:
L, A, and B are chromatic values representing a color of an object, that is, color space coordinates of the color, and any color has a unique coordinate value, where:

L represents luminosity, ranging from 0 to 100, the darkest is 0, and the brightest is 100;
A is a color change from green to red, ranging from -128 to +128, pure green is -128, pure red is +128, and the range is divided into 256 levels;
B is a color change from blue to yellow, ranging from -128 to +128, pure blue is -128, pure yellow is +128, and the range is divided into 256 levels.
ΔE (Delta-E), a color difference value, refers to a test unit of color difference perceived by human eyes in a uniform color perception space. This test method is used for ensuring a measure of color consistency by a manufacturer when a user specifies or accepts a certain color.

The present invention will be further described below in conjunction with the drawings and embodiments:

An embodiment of the present invention proposes a digital color matching system for pure color printing. The digital color matching system includes a color measurement probe unit, a storage unit, a data processing unit, and a multi-ink path scanning printing unit.

The color measurement probe unit is configured to detect a sample fabric and a color block fabric to obtain corresponding L, A, B values;

The storage unit is configured to store a color database with a variety of color information, each piece of color information including a color, a color number, LAB values, a color intensity formula and a color ink formula;

The data processing unit is configured to search the database according to the inputted color block sample data and obtain matching ink formula data,

obtain from the database three ink formula data that match three LAB values of the color block sample and have similar colors, obtain a recommended ink formula according to LAB value differences corresponding to the colors in the three ink formula data, and record the formula in the color database; and

The multi-ink path scanning printing unit is configured to print the color block sample.

The instructions for using the digital color matching system in the above embodiment are as follows:

First, an allowable deviation value of a color difference DELTA E is selected according to customer's requirements for an allowable range of color deviation. For digital dyeing products, DELTA E is set to be a value between 0.2 and 1. (Different applications have different requirements for DELTA E. In industry, DELTA E between 2 and 6 is acceptable in some applications). After the deviation value is selected, the deviation value is a basis for system search and calculation during measurement and matching. A customer can also set, according to the requirements of different colors for different deviations, an allowable deviation value of a color when measuring the color. For the convenience of description, DELTA E<0.5 is specified in the test of the following embodiments, indicating that the formula corresponding to the color meets requirements.

The greater the allowable deviation value of DELTA E, the more formulas that can be selected in the system, but the system still performs search according to the principle of "closest color" during calculation and selection, and provides a recommended formula based on the search result. The smaller the DELTA E, the closer the color of the selected (or provided by the system) formula to the standard sample, and the larger the DELTA E, the greater the difference between the color obtained from the selected (or provided by the system) formula and the target color.

The detected L, A, B values are inputted into the color center database, the system searches for a matching value to find a color number corresponding to the value and reads corresponding formula data under the color number, and color matching is performed according to the formula.

If there are no L, A, B values that completely match in the formula table (i.e., DELTA E > 0.5), L, A, B values are respectively searched within +-0.1; if there are no results, L, A, B values are continuously searched within +- 0.2; and so on, the range is expanded by +- 0.1 each time, until one or several colors that can cover the required L, A, B values are found.

For the selected one or several color formulas, the system provides a recommended formula according to its algorithm, and then makes a sample according to the recommended formula and measures the color. The measurement result is inputted into the system. Whether the color and the target color DELTA E meet the requirements is determined, and if the both do not meet the requirements, the system continues to search according to its algorithm and provide a new formula. Since the previous operation increases the number of color nodes and greatly reduced the color range, the system is run again, and the accuracy of the formula provided is greatly improved. This operation is repeated until the requirements of a color difference range are met.

In the above-mentioned digital color matching system, the digital color matching system further includes a remote color measurement module and a remote data system module, the remote color measurement module includes a client color measurement device, the remote data system module is configured to include a customer personal color center database and a general cloud color center database, the remote color measurement module transmits color information of a sample fabric to the customer personal color center database at a cloud, and the cloud reviews and submits the color information to the general cloud color center database. Each customer has its own account and customer personal color center database in the cloud, which ensures that each customer using the general cloud color center database has certain independence; according to the agreement with the customer, if a customer is willing to open all (or some) information of its own database, after the customer modifies or adds color nodes of the database, the maintainer of the center database can review the general applicability of the modification and repeat the color formula; and based on the result, whether the formula or the repeated result is updated to the center database is determined.

An embodiment of the present invention further provides a digital color matching method, the method including:

S100, pre-establishing a digital color matching system including an input module, a color database, and a calculation processing module, and preparing and inputting formula data of a basic color;

S200, selecting and setting, by a user, a system color deviation value serving as a basis for search and calculation of the digital color matching system; (the color deviation selection value is DE, which may be less than or equal to 0.5 and is 0.2 to 1 for digital dyeing products)

S300, obtaining LAB values of a target sample color, and inputting the LAB values of the target sample color into the color database; (L, A, B values of a color can be detected by a COMAT color measurement module, a data color system, or other systems)

S400, searching the color database to obtain a record matching the LAB values of the target sample in the color database, the record including a color formula corresponding to the LAB values, and using the color formula as a recommended ink formula (i.e., the three L, A, B values are identical),

if the record matching the LAB values of the target sample is not obtained, expanding numerical ranges of the L, A, B values, searching in the color database whether there are data records matching the L, A, B values respectively within the expanded numerical ranges, judging the color, capturing three called ink formulas that respectively match one of the L, A, B values and have similar colors in the target sample, and calculating, by the calculation processing module, an ink dosage in each of the ink formulas according to the difference between the LAB values of the target sample and each of the three called ink formulas to obtain a recommended ink formula;

S500, preparing ink according to the recommended ink formula obtained in S400, printing with the prepared ink to obtain a color block sample, measuring LAB values of the color block sample, and inputting the formula and LAB values of the color block sample into the color database to increase nodes of next digital color matching search; and

S600, comparing the LAB values of the color block sample in the color database and the target sample and calculating a sample color deviation value, if the sample color deviation value is smaller than or equal to the system color deviation value, using the recommended ink formula of the color block sample as a correct ink formula of the target sample, and

if the sample color deviation value is greater than the system color deviation value, repeating S400, S500, and S600 until the sample color deviation value of the color block sample and the target sample is smaller than or equal to the system color deviation value, and inputting data of the correct formula of the target sample into the color database.

Similarly, the above digital color matching method further includes the following steps: the remote color measurement module transmitting color information of a sample fabric to the customer personal color center database at the cloud, and the cloud reviewing and submitting the color information to the general cloud color center database. The color database used by the user may include the customer personal color center database and the general cloud color center database.

S100 is completed by the following steps:

S110, making a basic formula table according to basic colors selected by a user, and inputting the formula into the color database by the input module, where red, yellow, blue, black, gray, green, or other colors may be used as the basic color;

S120, preparing ink and printing a basic sample with a printer;

S130, reading LAB values of the color of the printed basic sample after color development and fixation; and

S140, automatically reading/inputting the basic color formula and the corresponding LAB values into the color database to form a color database including the basic color formula.

In the embodiment of the present invention, the color database is stored in a memory. The color database records colors, hexadecimal color numbers, LAB values, color intensity formulas, and color ink formulas. Data in the color database is searched and analyzed by a data processor, and the input may be manual input or automatic input by the system. The hardware part of the color measurement software unit includes at least the memory and the data processor.

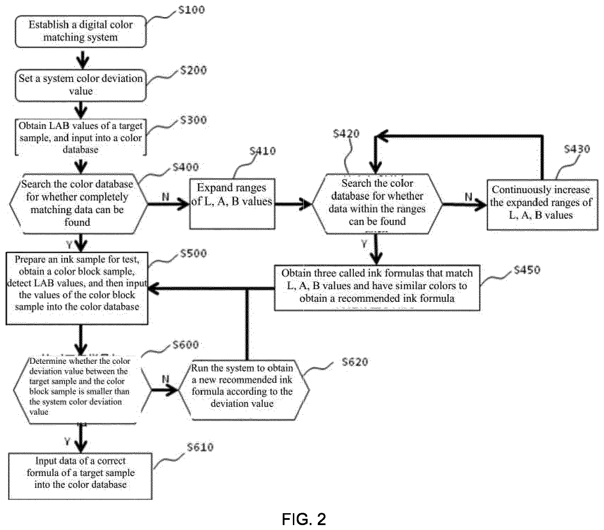

Referring to Fig. 2, Fig. 2 is a working flowchart of a color database module, illustrating a process of correcting a dyeing ink formula, preparing, and expanding target sample data in the database. The specific reference is as follows: A producer begins to detect relevant values of a target sample for making a sample to obtain an accurate formula and adds relevant data such as the formula and LAB values to a color database. At S300, a target sample is detected to obtain an LAB data value of a sample color. Preferably, the target sample can be detected by a color measurement probe unit to obtain corresponding L, A, B values, that is, the LAB data values of the sample color.

The LAB data values of the sample color are inputted into a color database at S300, whether completely matching data can be found is determined by searching at S400, and if the completely matching data is found, the process proceeds to S500 for ink preparation; if the data is not matched, the process turns to S410, ranges of L, A, B values are sequentially expanded by ±0.1 at S410, and then the process proceeds to S430; at S430, after the LAB values are expanded, whether there is matching data within the numerical range is searched in the color database, the color is determined at the same time, and if the matching data within the numerical range cannot be found or the data matches but the color is determined to be different, the process turns to S430, and the expanded ranges of L, A, B values are continuously increased by ±0.1; at S420, if the matching data within the numerical range is found and the color is determined to be similar, the process turns to S450, and three ink formulas that satisfy this condition are captured; S500 is performed after the ink formulas that satisfy this condition are captured, an ink sample is prepared for testing, and the prepared ink is loaded for printing to obtain a color block sample;

At S600, the color difference ΔE between the target product and the color block sample is detected; if the difference is greater than a custom standard value, for example, the color difference ΔE>0.5, the process turns to S620, the formula is adjusted based on the measured LAB deviation value between the color block sample and the target product, data of the adjusted formula is inputted into the color database, and S500 and S600 are performed again; and if the color difference ΔE between the target product and the color block sample is less than 0.5, it is determined that the ink formula is correct, the process turns to S610, ink is prepared according to the obtained correct formula to facilitate subsequent production, and relevant data of the formula is inputted into the color database.

At S600 and S620 above, the LAB values of the color block sample are detected, and the proportion of each single color ink in the mixed ink is adjusted by means of the difference between the LAB values and the LAB values of the target sample.

The process of digital color matching is illustrated below by Example 1 and Example 2 for further explanation. The color database may be a COMAT color database, and the system color deviation value is set to DE=0.5.

Example 1:

Sample making and production process for complete matching colors (complete matching refers to color difference DE<system deviation selection value):

a. At S200, an incoming sample X is detected by the color measurement module, and the detected data is shown in Table 1:

Table 1

| Color | L | A | B |
|---|---|---|---|
| | 64.300 | 69.813 | -15.763 |

b. At S300, the data is inputted into the Color Database. At S400, the system finds a color through calculation according to the settings, the color is numbered as #1, and data of the color is shown in Table 2:

Table 2

| Number | Color number | Color | L | A | B | Color intensity formula | | | |
|---|---|---|---|---|---|---|---|---|---|
| | | | | | | C | M | Y | K |
| 1 | 1# | | 64.102 | 69.465 | -16.001 | 8.3 | 74.1 | 0.1 | 0.05 |

| Color ink formula (4 colors) | | | | |
|---|---|---|---|---|
| H2O | C | M | Y | K |
| 79.36% | 2.08% | 18.53% | 0.03% | 0.01 % |

The system calculates the DE value between the 1# color and the target color:

$$DE=sqrt((64.102-64.300)^2 + (69.465-69.813)^2 + (-16.001-(-15.763))^2) = 0.466$$

Because DE = 0.466 < 0.5, it is considered that this color formula is completely suitable for preparing ink of sample colors.

c. At S500, a sample is prepared according to the formula, and a color block sample is printed; then at S600, the color block sample is measured and compared with the target sample for delta E value comparison. The delta E value is abbreviated as ∆E.

The LAB values obtained from the printed color block sample are as follows:

Table 3

| Color | L | A | B |
|---|---|---|---|
| | 63.980 | 69.693 | -16.050 |

The system calculates the ∆E value between the color of the color block sample and the color of the target sample:

$$DE = \sqrt{(63.98-64.300)^2 + (69.693-69.813)^2 + (-16.050-(-15.763))^2} = 0.446$$

Because DE = 0.446 < 0.5, the color formula is confirmed, and ink is produced with this formula.

It should be noted that since the color block sample matches the formula in Example 1, ∆E < 0.5 under normal circumstances; if ∆E > 0.5, the above steps are repeated to adjust the formula until ∆E < 0.5 between the color block sample and the target sample, S185 is performed after the correct ink is prepared, the formula of the color in the color database is updated, and ink is prepared for printing production.

Since the color difference DE between the target sample printed with the ink prepared from the formula of 1# color and the incoming sample X is less than 0.5, the L, A, B values of the 1# color in the system do not need to be changed, and the information of the newly prepared color and the formula also do not need to added to the system. If there is a great difference after printing with the ink prepared from the formula of 1# color, whether raw materials have been changed or the color development process has made a big difference should be checked.

Example 2:

Sample making and production process for incompletely matching colors with similar hues (DE>system deviation selection value):

a. At S300, a target sample Y is detected by the color measurement module, and the detected data is shown in Table 4:

Table 4

| Color | L | A | B |
|---|---|---|---|
| | 61.045 | -67.398 | -30.815 |

b. At S400, after the data is inputted into the COMAT Color Database, a completely matching color cannot be found in the database, that is, a color formula with DE < 0.5 cannot be found. At this time, S410 is performed, search ranges of L, A, B values are gradually expanded (by +-0.1 each time), and then S420 is performed, until the three values can match the range of a positive value and a negative value. After searching according to the sample Y, the data in the range is searched and the color is judged at the same time. At S450, three formulas are obtained, respectively:

Table 5

| 36# | | 59.527 | -69.054 | -31.986 | | 99.6 | 0.45 | 32.43 | 0.2 |
|---|---|---|---|---|---|---|---|---|---|
| 38# | | 59.38 | -68.067 | -28.675 | | 99.2 | 0.5 | 36.4 | 0.4 |
| 41# | | 62.896 | -65.735 | -34.753 | | 98.45 | 0 | 27.3 | 0.1 |
| Color ink formula (4 colors) | | | | | | | | | |
| H2O | C | M | Y | K | | | | | |
| 66.83% | 24.90% | 0.11 % | 8.11 % | 0.05 % | | | | | |
| 65.88% | 24.80% | 0.13 % | 9.10 % | 0.10 % | | | | | |
| 68.54% | 24.61% | 0.00 % | 6.83 % | 0.03 % | | | | | |

DE, DL, DA, and DB values between the three colors and the sample Y are respectively calculated:

Table 6

|  |  |  | System data-sample data | | |
|---|---|---|---|---|---|
| Sample Y |  | DE | DL | DA | DB |
| 36# |  | 2.533 | -1.518 | -1.656 | -1.171 |
| 38# |  | 2.793 | -1.665 | -0.669 | 2.14 |
| 41# |  | 4.658 | 1.851 | 1.663 | -3.938 |

The calculation processing module in the system obtains a weighted ink dosage according to the DE, DL, DA, and DB values to obtain a recommended ink formula. Taking sample Y as an example, the values of the recommended formula are:

Table 7

| Color intensity formula | | | | Color ink formula (4 colors) | | | | |
|---|---|---|---|---|---|---|---|---|
| C | M | Y | K | H2O | C | M | Y | K |
| 99.22 | 0.5 | 33.81 | 0.155 | 66.58% | 24.81 % | 0.13% | 8.45% | 0.04% \| |

c. S500 is performed to prepare a sample according to the formula and print a color block sample. The measured LAB values are as follows:

Table 8

| Color number | Color | L | A | B |
|---|---|---|---|---|
| Sample Y preparation |  | 60.593 | -67.3 | -30.68 |

Then S600 is performed to measure and compare the color block sample with the target sample (obtain ΔE value). After comparing with the sample Y, the following conclusions can be drawn:

Table 9

|  |  | System data-sample data | | | |
|---|---|---|---|---|---|
| Sample Y |  | DE | DL | DA | DB |
| 36# |  | 2.533 | -1.518 | -1.656 | -1.171 |
| 38# |  | 2.793 | -1.665 | -0.669 | 2.14 |
| 41# |  | 4.658 | 1.851 | 1.663 | -3.938 |
| Sample Y preparation |  | 0.482 | -0.452 | 0.098 | 0.135 |

DE<0.5 indicates that the formula can meet the requirements of sample color Y. The color number and information are stored in the system:

Table 10

| Color number | Color | L | A | B | Color intensity formula | | | |
|---|---|---|---|---|---|---|---|---|
|  |  |  |  |  | C | M | Y | K |
| 59# |  | 60.593 | -67.3 | -30.68 | 99.22 | 0.5 | 33.81 | 0.155 |

| Color ink formula (4 colors) | | | | |
|---|---|---|---|---|
| H2O | C | M | Y | K |
| 66.58% | 24.81% | 0.13 % | 8.45 % | 0.04 % |

In the process c of the second example, if the measured color deviation value is greater than the system color deviation value, steps S400, S500, and S600 are repeated until the sample color deviation value between the color block sample and the target sample is smaller than the system color deviation value, and in this process, the LAB values and formula of the color block sample printed each time are inputted into the color database, and relevant data of the final correct target sample is also inputted into the color database.

Based on the above examples and implementation process, the following conclusions can also be drawn:

1. In the color matching process, the system obtains 3 colors after searching, and calculates a formula based on the 3 colors, and the color of the formula is closer to the color of the target sample Y;

2. The color of the formula is printed into a color block sample and its LAB values are checked, and the color deviation value is checked; when DE>0.5, the formula does not meet the requirements, but all information of the formula still needs to be inputted into the system and the color is numbered to increase a node; at this time, when searching again, because the color is closer to the target color, the new calculation will use this node as a calculation basis;

3. When the DE of the color of the formula is less than 0.5, it is believed that the formula meets the requirements, and the color of the formula is numbered and inputted into the system as a new node to improve the precision of future search;

4. At the beginning of the establishment of the system, a large number of formulas are measured, formulated and inputted, and these formulas serve as a framework to ensure that the hue, luminosity, etc. of the color during preparation are within an accurate area;

5. Based on the framework and the calculation method set by the system, a large number of verified formulas are searched, formulated and inputted, so as to narrow the search range, increase the precision, and quickly and accurately obtain the required color formula during use;

6. Open data of different customers is reviewed based on the cloud database, and the reviewed data is updated to the database, so that the number of nodes in the cloud database continuously increases, and the formula provided is more accurate;

7. The learnability of the system itself determines the convenience and effectiveness of the system in future applications.

The tables in the examples are only examples for further describing specific implementations. It should be understood that the present invention is not limited to this. The color ink formula may include 4 colors, or 8 colors, 16 colors, 20 colors, etc.

An embodiment of the present invention further proposes a digital dyeing method, including digital color matching, preparation of ink for ink jet dyeing, and fixed single-channel ink jet dyeing, wherein the digital color matching includes the above-mentioned digital color matching method.

The present invention further proposes a digital dyeing system using the above method, the system mainly consisting of a digital color matching system, an ink mixing module and a fixed single-channel digital ink jet module, the digital color matching system including the digital color matching system described in the second aspect, the ink mixing module including an ink pre-mixing unit and a production ink mixing unit, wherein the ink pre-mixing unit is configured to pre-mix ink based on a color formula provided by a color measurement software unit, so that the multi-ink path scanning printing unit prints a corresponding color block sample; the production ink mixing unit is configured to prepare ink for production;

The fixed single-channel digital ink jet module includes at least one set of automatic unwinding and feeding unit, at least two sets of fixed nozzle ink jet printing unit, a belt guide unit, and a drying unit, wherein:

The automatic unwinding and feeding unit is configured to transport a pre-treated fabric that needs to be dyed to the fixed nozzle ink jet printing unit;

The fixed nozzle ink jet printing unit is used for direct dyeing and ink jet printing of the prepared ink onto the fabric;

The belt guide unit is configured to feed the printed fabric to the drying unit;

The drying unit is configured to dry the printed fabric.

All pure color printings implemented by digital printing on the current market are based on a printing mode of a digital printer, which realizes visually pure colors by positioning and dotting of a variety of colors. The digital dyeing system and dyeing used in the present invention are to print the fabric with a single dyeing ink in an ink jet manner by a row of nozzles fixed in a single channel, which avoids troublesome dotted graininess for a digital printer. The system prints uniform colors without color difference, the ink used can be compatible with ink used by the digital printer, and the system can also use special ink for a digital dyeing machine. The ink has a large particle size range, its chromophoric group is destroyed little, and its color development effect is greatly improved as compared to the color development effect of printing pure colors with the digital printer. The system can print dispersive, reactive, paint, and acidic inks, and printable fabrics include almost all kinds of fabrics such as polyester, cotton, silk, wool, and blended fabrics.

In the digital dyeing method and dyeing system of the embodiments of the present invention, when fixed nozzles are used for ink jet printing, at least two sets of fixed nozzle ink jet printing units are used, of which at least one set of fixed nozzle ink jet printing unit performs printing, and at least one set of fixed nozzle ink jet printing unit is cleaned at a cleaning position and is ready for next printing task, so that almost uninterrupted operation can be achieved during ink jet printing, and the continuity of dyeing operation is increased to improve dyeing efficiency and dyeing quality.

The above embodiments are only to illustrate the technical concept and characteristics of the present invention, and aim to allow a person who is familiar with this technology to understand the content of the present invention and implement the same, and the protection scope of the present invention is not limited thereto. All equivalent variations or modifications made according to the essence of the present invention shall fall within the protection scope of the present invention.

**Claims**

1. A digital color matching method for configuring a pure color dyeing formula of a fabric, the method comprising:

   S100, pre-establishing a digital color matching system comprising an input module, a color database, and a calculation processing module, and preparing and inputting formula data of a basic color;
   S200, selecting and setting, by a user, a system color deviation value serving as a basis for search and calculation of the digital color matching system;
   S300, obtaining LAB values of a target sample color, and inputting the LAB values of the target sample color into the color database;
   S400, searching the color database to obtain a record matching the LAB values of the target sample in the color database, the record including a color formula corresponding to the LAB values, and using the color formula as a recommended ink formula,
   if the record matching the LAB values of the target sample is not obtained, expanding numerical ranges of the L, A, B values, searching in the color database whether there are data records matching the L, A, B values respectively within the expanded numerical ranges, judging the color,
   capturing three called ink formulas that respectively match one of the L, A, B values and have similar colors in the target sample, and calculating, by the calculation processing module, an ink dosage in each of the ink formulas according to the difference between the LAB values of the target sample and each of the three called ink formulas to obtain a recommended ink formula;
   S500, preparing ink according to the recommended ink formula obtained in S400, printing with the prepared ink to obtain a color block sample, measuring LAB values of the color block sample,
   and inputting the formula and LAB values of the color block sample into the color database to increase nodes of next digital color matching search; and
   S600, comparing the LAB values of the color block sample in the color database and the target sample and calculating a sample color deviation value, if the sample color deviation value is smaller than the system color deviation value, using the recommended ink formula of the color block sample as a correct ink formula of the target sample, and
   if the sample color deviation value is greater than the system color deviation value, repeating S400, S500, and S600 until the sample color deviation value of the color block sample and the target sample is smaller than the system color deviation value, and inputting data of the correct formula of the target sample into the color database.

2. The digital color matching method according to claim 1, wherein the input module inputs colors, color numbers, LAB values, color intensity formulas and color ink formulas into the color database, and the calculation processing module searches, analyzes and calculates the data in the color database.

3. The digital color matching method according to claim 1, wherein S100 is completed by the following steps:

   S110, making a basic formula table according to basic colors selected by a user, and inputting the formula into the color database by the input module;
   S120, preparing ink and printing a basic sample with a printer;
   S130, reading LAB values of the color of the printed basic sample after color development and fixation; and
   S140, automatically reading/inputting the basic color formula and the corresponding LAB values into the color database to form a color database including the basic color formula.

4. The digital color matching method according to claim 1, wherein the numerical range specified for L is 0 to 100; and the numerical range specified for A and B is -128 to +128.

5. The digital color matching method according to claim 3, wherein when the L, A, B data values of the target sample color are inputted into the color database, and the color database is searched to find whether there is matching formula data, if the data does not match, the numerical ranges of LAB are expanded, and then an ink formula that satisfies the condition is captured, wherein the LAB values are expanded by $\pm 1$.

6. The digital color matching method according to claim 1, wherein in step S500, the ink formula of the color block sample and the measured LAB values are inputted into the color database to increase nodes of digital color matching search.

7. A digital color matching system, wherein the digital color matching system comprises a color measurement probe unit, a storage unit, a data processing unit, and a multi-ink path scanning printing unit, wherein:

the color measurement probe unit is configured to detect a sample fabric and a color block fabric to obtain corresponding L, A, B values;
the storage unit is configured to store a color database with a variety of color information, each piece of color information including a color, a color number, LAB values, a color intensity formula and a color ink formula;
the data processing unit is configured to search the database according to the inputted color block sample data and obtain matching ink formula data,
obtain from the database three ink formula data that match three LAB values of the color block sample and have similar colors, obtain a recommended ink formula according to LAB value differences corresponding to the colors in the three ink formula data, and record the formula in the color database; and
the multi-ink path scanning printing unit is configured to print the color block sample.

8. The digital color matching system according to claim 7, wherein the digital color matching system further comprises a remote color measurement module and a remote data system module, the remote color measurement module comprises a client color measurement device, the remote data system module is configured to comprise a customer personal color center database and a general cloud color center database, the remote color measurement module transmits color information of a sample fabric to the customer personal color center database at a cloud, and the cloud reviews and submits the color information to the general cloud color center database.

9. A digital dyeing method, wherein the digital dyeing method comprises digital color matching, preparation of ink for ink jet dyeing, and fixed single-channel ink jet dyeing, wherein the digital color matching comprises the digital color matching method according to claims 1 to 6.

10. The digital dyeing method according to claim 9, wherein the steps of fixed single-channel ink jet dyeing are as follows:

loading a fabric that is pre-treated and needs to be dyed to an ink jet dyeing machine;
feeding the color-matched ink into an ink system;
starting the machine for direct jet dyeing and ink jet printing with fixed nozzles; and
delivering the printed fabric to an oven by the belt guide unit for drying.

11. The digital dyeing method according to claim 10, wherein when the fixed nozzles are used for ink jet printing, at least two sets of fixed nozzle ink jet printing units are used, of which at least one set of fixed nozzle ink jet printing unit performs printing, and at least one set of fixed nozzle ink jet printing unit is cleaned at a cleaning position and is ready for next printing task.

12. A digital dyeing system, wherein the system is mainly composed of a digital color matching system, an ink mixing module, and a fixed single-channel digital ink jet module;
the digital color matching system comprises a color measurement probe unit, a storage unit, a data processing unit, and a multi-ink path scanning printing unit, wherein:

the color measurement probe unit is configured to detect a sample fabric and a color block fabric to obtain corresponding L, A, B values;
the storage unit is configured to store a color database with a variety of color information, each piece of color information including a color, a color number, LAB values, a color intensity formula and a color ink formula;
the data processing unit is configured to search the database according to the inputted color block sample data and obtain matching ink formula data,
obtain from the database three ink formula data that match three LAB values of the color block sample and have similar colors, obtain a recommended ink formula according to LAB value differences corresponding to the colors in the three ink formula data, and record the formula in the color database; and
the multi-ink path scanning printing unit is configured to print the color block sample;
the ink mixing module comprises an ink pre-mixing unit and a production ink mixing unit, wherein
the ink pre-mixing unit is configured to pre-mix ink based on a color formula provided by a color measurement software unit, so that the multi-ink path scanning printing unit prints a corresponding color block sample; the production ink mixing unit is configured to prepare ink for production;
the fixed single-channel digital ink jet module comprises at least one set of automatic unwinding and feeding unit, at least two sets of fixed nozzle ink jet printing unit, a belt guide unit, and a drying unit, wherein:

> the automatic unwinding and feeding unit is configured to transport a pre-treated fabric that needs to be dyed to the fixed nozzle ink jet printing unit;
> the fixed nozzle ink jet printing unit is used for direct dyeing and ink jet printing of the prepared ink onto the fabric;
> the belt guide unit is configured to feed the printed fabric to the drying unit; and
> the drying unit is configured to dry the printed fabric.

Color measurement
probe unit

Storage unit

Data processing unit

Multi-ink path
scanning printing unit

FIG. 1

Establish a digital color matching system — S100

Set a system color deviation value — S200

Obtain LAB values of a target sample, and input into a color database — S300

Search the color database for whether completely matching data can be found — S400

Expand ranges of L, A, B values — S410

Search the color database for whether data within the ranges can be found — S420

Continuously increase the expanded ranges of L, A, B values — S430

N

N

Obtain three called ink formulas that match L, A, B values and have similar colors to obtain a recommended ink formula — S450

Y

Prepare an ink sample for test, obtain a color block sample, detect LAB values, and then input the values of the color block sample into the color database — S500

Determine whether the color deviation value between the target sample and the color block sample is smaller than the system color deviation value — S600

Run the system to obtain a new recommended ink formula according to the deviation value — S620

N

Y

Input data of a correct formula of a target sample into the color database — S610

FIG. 2

16

| No. | Color No. | Color | L | A | B | Color intensity formula | | | | Color ink formula (4 colors) | | | | |
|---|---|---|---|---|---|---|---|---|---|---|---|---|---|---|
| | | | | | | C | M | Y | K | H2O | C | M | Y | K |
| 1 | 1# | | 64,102 | 69,465 | -16,001 | 8,3 | 74,1 | 0,1 | 0,05 | 79,36% | 2,08% | 18,53% | 0,03% | 0,01% |
| 2 | 35# | ■ | 65,976 | 85,012 | -10,021 | 0,1 | 82,2 | 0,3 | 0,1 | 79,33% | 0,03% | 20,55% | 0,08% | 0,03% |
| 3 | 37# | | 60,42 | -67,211 | -32,456 | 99,9 | 0,3 | 32,1 | 0,5 | 66,80% | 24,98% | 0,08% | 8,03% | 0,13% |
| 4 | 52# | | 64,76 | -62,103 | -22,201 | 89,3 | 0,1 | 35,9 | 0,2 | 68,63% | 22,33% | 0,03% | 8,98% | 0,05% |
| 5 | 2# | | 75,012 | -9,869 | 75,014 | 34,4 | 22,1 | 97,2 | 1,34 | 61,24% | 8,60% | 5,53% | 24,30% | 0,34% |
| 6 | 3# | ■ | 52,031 | 15,013 | 3,005 | 49,2 | 58,9 | 45,7 | 3,23 | 60,74% | 12,30% | 14,73% | 11,43% | 0,81% |
| 7 | 4# | | 24,224 | 38,201 | -23,261 | 75,4 | 100,3 | 46,1 | 9,2 | 42,25% | 18,85% | 25,08% | 11,53% | 2,30% |
| 8 | 5# | | 49,384 | 9,041 | 10,054 | 54,2 | 59,4 | 57,8 | 3,1 | 56,33% | 13,55% | 14,85% | 14,45% | 0,73% |
| 9 | 6# | | 22,351 | 4,102 | 5,113 | 73,1 | 74,2 | 75,7 | 46,9 | 32,53% | 18,28% | 18,55% | 18,93% | 11,73% |
| 10 | 7# | ■ | 35,284 | 16,211 | -65,210 | 92,1 | 71,3 | 0,2 | 0 | 59,10% | 23,03% | 17,83% | 0,05% | 0,00% |
| 11 | 8# | | 62,013 | -45,218 | 7,266 | 77,3 | 12,2 | 59,1 | 1 | 62,60% | 19,33% | 3,05% | 14,78% | 0,25% |
| 12 | 9# | | 75,241 | -10,241 | 75,031 | 34,0 | 22,2 | 97,3 | 0,2 | 61,58% | 8,50% | 5,55% | 24,33% | 0,05% |
| 13 | 10# | | 78,336 | -72,031 | 74,201 | 66,9 | 0,1 | 99,9 | 0 | 58,23% | 16,73% | 0,03% | 24,98% | 0,00% |
| 14 | 11# | | 78,121 | -37,132 | 75,162 | 47,8 | 0,3 | 95,8 | 0,1 | 64,00% | 11,95% | 0,08% | 23,95% | 0,03% |
| 15 | 12# | | 78,192 | -6,004 | 72,341 | 26,2 | 21,3 | 89,1 | 0,1 | 65,83% | 6,55% | 5,33% | 22,28% | 0,03% |
| 16 | 13# | | 78,284 | 26,342 | 74,218 | 0,2 | 41,9 | 81,9 | 0 | 69,00% | 0,05% | 10,48% | 20,48% | 0,00% |
| 17 | 14# | | 78,041 | 62,040 | 72,064 | 0,1 | 61,8 | 65,7 | 0 | 68,10% | 0,03% | 15,45% | 16,43% | 0,00% |
| 18 | 15# | ■ | 78,068 | 95,342 | 72,320 | 0 | 80,7 | 54,2 | 0 | 66,23% | 0,00% | 20,18% | 13,55% | 0,00% |
| 19 | 16# | ■ | 78,130 | 123,038 | 72,149 | 0,3 | 99,8 | 42,3 | 0 | 64,40% | 0,08% | 24,95% | 10,58% | 0,00% |
| 20 | 17# | ■ | 78,261 | 121,295 | 41,022 | 0,1 | 98,2 | 15,1 | 0 | 71,65% | 0,03% | 24,55% | 3,78% | 0,00% |
| 21 | 18# | | 78,064 | 82,198 | 38,210 | 0,1 | 73,1 | 28,6 | 0,2 | 74,50% | 0,03% | 18,28% | 7,15% | 0,05% |
| 22 | 19# | | 78,091 | 51,300 | 36,054 | 0,2 | 56,0 | 38,9 | 0,1 | 76,20% | 0,05% | 14,00% | 9,73% | 0,03% |
| 23 | 20# | | 83,216 | -13,054 | 30,119 | 29,9 | 9,9 | 50,7 | 0,2 | 77,33% | 7,48% | 2,48% | 12,68% | 0,05% |
| 24 | 21# | | 83,224 | -54,099 | 26,079 | 58,1 | 0,2 | 55,8 | 0,1 | 71,45% | 14,53% | 0,05% | 13,95% | 0,03% |
| 25 | 22# | | 83,321 | -102,21 | 26,204 | 80,8 | 0 | 65,3 | 0 | 63,48% | 20,20% | 0,00% | 16,33% | 0,00% |
| 26 | 23# | | 91,067 | -104,16 | -14,009 | 86,7 | 0,1 | 31,1 | 0 | 70,53% | 21,68% | 0,03% | 7,78% | 0,00% |

FIG. 3

FIG 4

EP 4 303 357 A1

| No. | Color No. | Color | L | A | B | Color intensity formula | | | | Color ink formula (4 colors) | | | | |
|---|---|---|---|---|---|---|---|---|---|---|---|---|---|---|
| | | | | | | C | M | Y | K | H2O | C | M | Y | K |
| 1 | 1# | | 64,102 | 69,465 | -16,001 | 8,3 | 74,1 | 0,1 | 0,05 | 79,36% | 2,08% | 18,53% | 0,03% | 0,01% |
| | | ■ | 50,252 | 1,21 | -1,254 | 62,06 | 52,89 | 50,02 | 1,04 | 58,50% | 15,52% | 13,22% | 12,51% | 0,26% |
| 2 | 35# | ■ | 65,976 | 85,012 | -10,021 | 0,1 | 82,2 | 0,3 | 0,1 | 79,33% | 0,03% | 20,55% | 0,08% | 0,03% |
| | 36# | | 59,527 | -69,054 | -31,986 | 99,6 | 0,45 | 32,43 | 0,2 | 66,83% | 24,90% | 0,11% | 8,11% | 0,05% |
| | 38# | | 59,38 | -68,067 | -28,675 | 99,2 | 0,5 | 36,4 | 0,4 | 65,88% | 24,80% | 0,13% | 9,10% | 0,10% |
| | 41# | | 62,896 | -65,735 | -34,753 | 93,45 | 0 | 27,3 | 0,1 | 68,54% | 24,61% | 0,00% | 6,83% | 0,03% |
| | Sample Y | | 61,045 | -67,398 | -30,315 | | | | | | | | | |
| | 59# | ■ | 60,593 | -67,3 | -30,68 | 99,22 | 0,5 | 33,81 | 0,16 | 66,58% | 24,81% | 0,13% | 8,45% | 0,04% |
| | 54# | | 61,25 | -67,869 | -30,576 | 96,78 | 15,22 | 33,75 | 0,15 | 63,53% | 24,20% | 3,81% | 8,44% | 0,04% |
| 3 | 37# | | 60,42 | -67,211 | -32,456 | 99,9 | 0,3 | 32,1 | 0,5 | 66,80% | 24,98% | 0,08% | 8,03% | 0,13% |
| 4 | 52# | | 64,76 | -62,103 | -22,201 | 89,3 | 0,1 | 35,9 | 0,2 | 68,63% | 22,33% | 0,03% | 8,98% | 0,05% |
| 5 | 2# | | 75,012 | -9,869 | 75,014 | 34,4 | 22,1 | 97,2 | 1,34 | 61,24% | 8,60% | 5,53% | 24,30% | 0,34% |
| 6 | 3# | ■ | 52,031 | 15,013 | 3,005 | 49,2 | 58,9 | 45,7 | 3,23 | 60,74% | 12,30% | 14,73% | 11,43% | 0,81% |
| 7 | 4# | ■ | 24,224 | 38,201 | -23,261 | 75,4 | 100,3 | 46,1 | 9,2 | 42,25% | 18,85% | 25,08% | 11,53% | 2,30% |
| 8 | 5# | ■ | 49,384 | 9,041 | 10,054 | 54,2 | 59,4 | 57,8 | 3,1 | 56,38% | 13,55% | 14,85% | 14,45% | 0,78% |
| 9 | 6# | ■ | 22,351 | 4,102 | 5,113 | 73,1 | 74,2 | 75,7 | 46,9 | 32,53% | 18,28% | 18,55% | 18,93% | 11,73% |
| 10 | 7# | | 35,284 | 16,211 | -65,210 | 92,1 | 71,3 | 0,2 | 0 | 59,10% | 23,03% | 17,83% | 0,05% | 0,00% |
| 11 | 8# | | 62,013 | -45,218 | 7,266 | 77,3 | 12,2 | 59,1 | 1 | 62,60% | 19,33% | 3,05% | 14,78% | 0,25% |
| 12 | 9# | | 75,241 | -10,241 | 75,031 | 34,0 | 22,2 | 97,3 | 0,2 | 61,58% | 8,50% | 5,55% | 24,33% | 0,05% |
| 13 | 10# | | 78,336 | -72,031 | 74,201 | 66,9 | 0,1 | 99,9 | 0 | 58,28% | 16,73% | 0,03% | 24,98% | 0,00% |
| 14 | 11# | | 78,121 | -37,132 | 75,162 | 47,8 | 0,3 | 95,8 | 0,1 | 64,00% | 11,95% | 0,08% | 23,95% | 0,03% |
| 15 | 12# | | 78,192 | -6,004 | 72,341 | 26,2 | 21,3 | 89,1 | 0,1 | 65,83% | 6,55% | 5,33% | 22,28% | 0,03% |
| 16 | 13# | | 78,284 | 26,342 | 74,218 | 0,2 | 41,9 | 81,9 | 0 | 69,00% | 0,05% | 10,48% | 20,48% | 0,00% |
| 17 | 14# | | 78,041 | 62,040 | 72,064 | 0,1 | 61,8 | 65,7 | 0 | 68,10% | 0,03% | 15,45% | 16,43% | 0,00% |
| 18 | 15# | ■ | 78,068 | 95,342 | 72,320 | 0 | 80,7 | 54,2 | 0 | 66,28% | 0,00% | 20,18% | 13,55% | 0,00% |
| 19 | 16# | | 78,130 | 123,038 | 72,149 | 0,3 | 99,8 | 42,3 | 0 | 64,40% | 0,08% | 24,95% | 10,58% | 0,00% |
| 20 | 17# | ■ | 78,261 | 121,295 | 41,022 | 0,1 | 98,2 | 15,1 | 0 | 71,65% | 0,03% | 24,55% | 3,78% | 0,00% |
| 21 | 18# | | 78,064 | 82,198 | 38,210 | 0,1 | 73,1 | 28,6 | 0,2 | 74,50% | 0,03% | 18,28% | 7,15% | 0,05% |
| 22 | 19# | | 78,091 | 51,300 | 36,054 | 0,2 | 56,0 | 38,9 | 0,1 | 76,20% | 0,05% | 14,00% | 9,73% | 0,03% |
| 23 | 20# | | 83,216 | -13,054 | 30,119 | 29,9 | 9,9 | 50,7 | 0,2 | 77,33% | 7,48% | 2,48% | 12,68% | 0,05% |
| 24 | 21# | | 83,224 | -54,099 | 26,079 | 58,1 | 0,2 | 55,8 | 0,1 | 71,45% | 14,53% | 0,05% | 13,95% | 0,03% |
| 25 | 22# | | 83,321 | -102,21 | 26,204 | 80,8 | 0 | 65,3 | 0 | 63,48% | 20,20% | 0,00% | 16,33% | 0,00% |
| 26 | 23# | | 91,067 | -104,16 | -14,009 | 86,7 | 0,1 | 31,1 | 0 | 70,53% | 21,68% | 0,03% | 7,78% | 0,00% |

General cloud
color center
database

Customer personal
color center
database

Remote color
measurement module

Client color
measurement device

FIG. 5

Digital color matching

Preparation of ink for
ink jet dyeing

Fixed single-channel
ink jet dyeing

FIG. 6

FIG. 7

**Digital dyeing system**

Color measurement probe unit

Storage unit

Data processing unit

Multi-ink path scanning printing unit

**Ink mixing module**

Ink pre-mixing unit

Production ink mixing unit

**Fixed single-channel digital ink jet module**

Automatic unwinding and feeding unit

Fixed nozzle ink jet printing unit

Belt guide unit

Drying unit

FIG. 8

## INTERNATIONAL SEARCH REPORT

| International application No. |
| --- |
| **PCT/CN2021/094539** |

**A.    CLASSIFICATION OF SUBJECT MATTER**

D06P 5/30(2006.01)i;  G06Q 30/06(2012.01)i

According to International Patent Classification (IPC) or to both national classification and IPC

**B.    FIELDS SEARCHED**

Minimum documentation searched (classification system followed by classification symbols)

D06P; G06Q; G06F

Documentation searched other than minimum documentation to the extent that such documents are included in the fields searched

Electronic data base consulted during the international search (name of data base and, where practicable, search terms used)

CNABS, VEN, CNKI: 纺织, 织物, 数码, 配色, 染色, LAB, 数据库, 探头, 探测, 检测, 存储, textile, fabric, cloth, database, probe+, detect+, store+

**C.    DOCUMENTS CONSIDERED TO BE RELEVANT**

| Category* | Citation of document, with indication, where appropriate, of the relevant passages | Relevant to claim No. |
| --- | --- | --- |
| A | CN 110941731 A (ALIBABA GROUP HOLDING LIMITED) 31 March 2020 (2020-03-31) description, paragraphs [0146]-[0352], and figures 1-10 | 1-12 |
| A | CN 102449644 A (PPG INDUSTRIES OHIO, INC.) 09 May 2012 (2012-05-09) entire document | 1-12 |
| A | CN 1458626 A (DAINIPPON INK & CHEMICALS, INC.) 26 November 2003 (2003-11-26) entire document | 1-12 |
| A | CN 1371073 A (DAINIPPON INK & CHEMICALS, INC.) 25 September 2002 (2002-09-25) entire document | 1-12 |
| A | CN 103745393 A (BEHR PROCESS CORPORATION) 23 April 2014 (2014-04-23) entire document | 1-12 |
| A | WO 2005114482 A1 (SUN CHEMICAL CORP. et al.) 01 December 2005 (2005-12-01) entire document | 1-12 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **03 December 2021** | **09 December 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

# EP 4 303 357 A1

## INTERNATIONAL SEARCH REPORT
### Information on patent family members

International application No.

**PCT/CN2021/094539**

| Patent document cited in search report | | | Publication date (day/month/year) | Patent family member(s) | | | Publication date (day/month/year) |
|---|---|---|---|---|---|---|---|
| CN | 110941731 | A | 31 March 2020 | None | | | |
| CN | 102449644 | A | 09 May 2012 | CA | 2758870 | A1 | 21 October 2010 |
| | | | | AU | 2010236537 | A1 | 27 October 2011 |
| | | | | WO | 2010120873 | A2 | 21 October 2010 |
| | | | | AU | 2014203820 | A1 | 31 July 2014 |
| | | | | US | 2010262551 | A1 | 14 October 2010 |
| | | | | EP | 2419866 | A2 | 22 February 2012 |
| CN | 1458626 | A | 26 November 2003 | CN | 1331093 | C | 08 August 2007 |
| | | | | KR | 20030089485 | A | 21 November 2003 |
| | | | | JP | 2003337848 | A | 28 November 2003 |
| | | | | US | 2003216972 | A1 | 20 November 2003 |
| | | | | EP | 1363220 | A2 | 19 November 2003 |
| | | | | TW | 200402643 | A | 16 February 2004 |
| | | | | CA | 2428767 | A1 | 17 November 2003 |
| CN | 1371073 | A | 25 September 2002 | TW | 559738 | B | 01 November 2003 |
| | | | | CA | 2366165 | A1 | 27 June 2002 |
| | | | | EP | 1221687 | A2 | 10 July 2002 |
| | | | | KR | 20020053745 | A | 05 July 2002 |
| | | | | US | 2002082944 | A1 | 27 June 2002 |
| CN | 103745393 | A | 23 April 2014 | CA | 2811027 | A1 | 06 October 2013 |
| | | | | BR | 102013008334 | A2 | 26 January 2016 |
| | | | | US | 2013268871 | A1 | 10 October 2013 |
| | | | | MX | 2013003861 | A | 14 October 2013 |
| WO | 2005114482 | A1 | 01 December 2005 | BR | PI0510904 | A | 06 November 2007 |
| | | | | PT | 1756735 | T | 30 December 2016 |
| | | | | PL | 2234023 | T3 | 29 November 2019 |
| | | | | US | 2005078328 | A1 | 14 April 2005 |
| | | | | IL | 179418 | A | 28 November 2013 |
| | | | | EP | 1756735 | A1 | 28 February 2007 |
| | | | | DK | 1756735 | T3 | 06 February 2017 |
| | | | | NZ | 551411 | A | 31 July 2009 |
| | | | | ZA | 200609898 | B | 30 July 2008 |
| | | | | JP | 2007538342 | A | 27 December 2007 |
| | | | | EP | 2234023 | A1 | 29 September 2010 |
| | | | | AU | 2005246363 | A1 | 01 December 2005 |
| | | | | ES | 2612112 | T3 | 12 May 2017 |
| | | | | CA | 2567553 | A1 | 01 December 2005 |
| | | | | CN | 101019116 | A | 15 August 2007 |

Form PCT/ISA/210 (patent family annex) (January 2015)